Europäisches Patentamt

European Patent Office

Office européen des brevets

(11) Veröffentlichungsnummer: **0 067 406**
**B1**

(12) **EUROPÄISCHE PATENTSCHRIFT**

(45) Veröffentlichungstag der Patentschrift:
**02.04.86**

(21) Anmeldenummer: **82105025.9**

(22) Anmeldetag: **08.06.82**

(51) Int. Cl.⁴: **B 60 P 3/08**

(54) **Fahrzeug zum Transport von Personenkraftwagen.**

(30) Priorität: **10.06.81 DE 8117184 U**

(43) Veröffentlichungstag der Anmeldung:
**22.12.82 Patentblatt 82/51**

(45) Bekanntmachung des Hinweises auf die Patenterteilung:
**02.04.86 Patentblatt 86/14**

(84) Benannte Vertragsstaaten:
**AT BE CH DE FR GB IT LI LU NL SE**

(56) Entgegenhaltungen:
**US - A - 2 520 698**
**US - A - 3 053 508**
**US - A - 4 142 755**

(73) Patentinhaber: **Erik Strasser Spezialtransporte GmbH & Co. KG, Domagkstrasse 24, D-8000 München (DE)**

(72) Erfinder: **Strasser, Erik, Rabenkopfstrasse 46, D-8000 München 90 (DE)**

(74) Vertreter: **Füchsle, Klaus, Dipl.-Ing. et al, Hoffmann . Eitle & Partner Patentanwälte Arabellastrasse 4, D-8000 München 81 (DE)**

ACTORUM AG

**Beschreibung**

Die Erfindung betrifft ein Fahrzeug zum Transport von Personenkraftwagen mit einer unteren und einer oberen Ladefläche, die mittels im Abstand seitlich des Fahrzeugs angeordneten Tragstützen verbunden sind.

Derartige Fahrzeuge, wie beispielsweise in US-A-3 053 508 dargestellt, dienen zum Transport von Personenkraftwagen auf der Strasse.

Die ersten Lastkraftwagen zum Transport von Personenkraftwagen auf der Strasse wurden vor etwa 25 Jahren entwickelt und waren aus Gründen des Ladegutschutzes insgesamt verkleidet (siehe z.B. US-A-2 520 698).

Nachdem die Personenkraftwagen immer breiter wurden, musste man zu offenen Fahrzeugen übergehen, um die höchstzulässige Breite der Fahrzeuge einzuhalten und trotzdem zu ermöglichen, dass die Personenkraftwagen in den Zug hineingefahren werden und die Fahrer aussteigen konnten.

Mit der offenen Bauweise derartiger Fahrzeuge steigerte sich der Treibstoffverbrauch aufgrund des höheren Luftwiderstandes sowohl im be- als auch im entladenen Zustand beträchtlich.

Es ist daher Aufgabe der vorliegenden Erfindung ein Fahrzeug der eingangs genannten Art derart weiterzubilden, dass der Luftwiderstand vermindert wird.

Diese Aufgabe wird durch die in Anspruch 1 gekennzeichnete Erfindung gelöst, d.h., durch auf beiden Seiten des Fahrzeugs sich zwischen den Ladeflächen vom vorderen Ende der vorderen unteren Ladefläche erstreckende Seitenverkleidungen, die kürzer als die Ladeflächen sind.

Mit der Erfindung wird in vorteilhafter Weise schon bei relativ kurzen Seitenverkleidungen eine erhebliche Verminderung des Luftwiderstandes und damit des Kraftstoffverbrauchs erzielt.

Vorteilhafte Ausgestaltungen der Erfindung ergeben sich aus den Unteransprüchen.

So kann die Seitenverkleidung zur weiteren Verringerung des Luftwiderstandes sich auch über eine längere Strecke der Ladefläche erstrecken.

Ebenfalls können zur weiteren Verringerung des Luftwiderstandes mehrere Seitenverkleidungen im Abstand zur vordersten Seitenverkleidung auf beiden Seiten des Fahrzeugs längs der Ladefläche vorgesehen sein.

Zum einfacheren Be- und Entladen des Fahrzeugs können die Seitenverkleidungen weiter von dem Fahrzeug entfernbar sein.

Die Erfindung wird im folgenden unter Bezugnahme auf die Zeichnung an Hand mehrerer Ausführungsbeispiele beschrieben. Es zeigt:

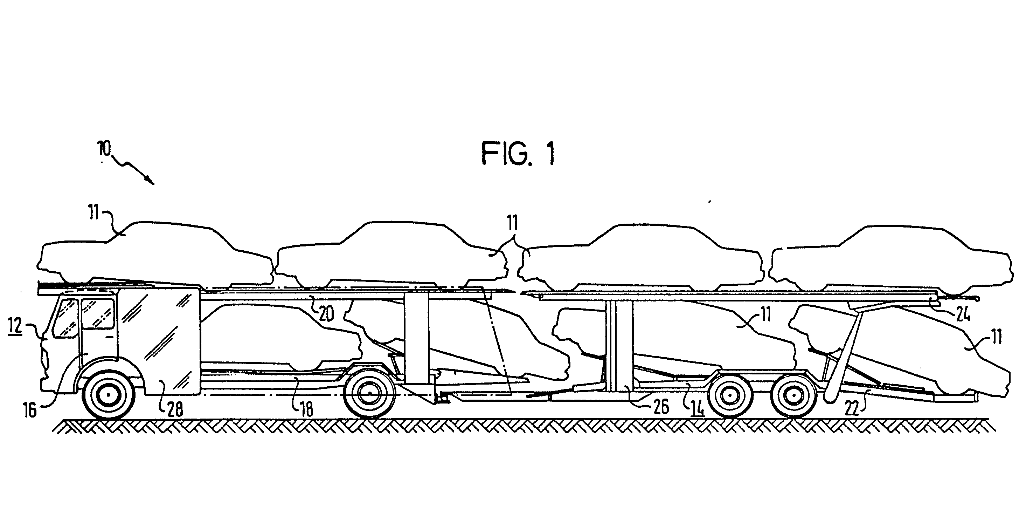

Fig. 1 ein Fahrzeug zum Transport von Personenkraftwagen mit einer Seitenverkleidung.

In Fig. 1 ist ein Fahrzeug 10 zum Transport von Personenkraftwagen 11, bestehend aus einem LKW 12 und einem Anhänger 14, dargestellt. Der LKW 12 weist eine untere, sich an das Fahrerhaus 16 anschliessende Ladefläche 18 und eine sich über das Fahrerhaus 16 erstreckende, obere Ladefläche 20 auf. Die untere und obere Ladeflächen 22, 24 des Anhängers 14 sind mit den Ladeflächen 18, 20 des LKW's 12 ausgerichtet und bilden mit ihnen eine im wesentlichen durchgehende Ladefläche. Die unteren Ladeflächen 18, 20 und die oberen Ladeflächen 20, 24 sind auf beiden Seiten des Fahrzeugs mittels Stützträgern 26 verbunden. Zwischen den unteren Ladeflächen 18, 22 und den oberen Ladeflächen 20, 24 sind auf beiden Seiten des Fahrzeugs 10 Seitenverkleidungen 28 angeordnet, die sich von der Rückseite des Fahrerhauses 16 bzw. von der Vorderseite der Ladeflächen 18, 20 in Längsrichtung der Ladeflächen 18, 20 nach hinten erstrecken, jedoch kürzer als die Ladeflächen 18, 20 sind. Diese Seitenverkleidungen 28 können an dem Fahrzeug 10 fest oder entfernbar angeordnet sein. Weiter können sich an die vorderen Seitenverkleidungen 28 weitere nicht gezeigte Seitenverkleidungen 28 in Abstand längs der Ladeflächen anschliessen.

Durch die Anordnung von relativ kurzen Seitenverkleidungen, die sich an das Fahrerhaus anschliessen, wird in überraschender Weise eine relativ hohe Verminderung des Luftwiderstandes und Kraftstoffverbrauchs erzielt, wie aus den in der Tabelle dargestellten Versuchsergebnissen hervorgeht.

Tabelle

| Untersuchungsvariante | $F \cdot c_w$ $m^2$ | $\Delta(F \cdot c_w)$ % | $c_w$ |
|---|---|---|---|
| Ausgangszustand mit Beladung $F = 0,088839\ m^2$ Varianten mit Seitenverkleidung: | 0,072137 | – | 0,812 |
| Länge L = 130 cm | 0,067339 | −6,7 | 0,758 |
| L = 200 cm | 0,065740 | −8,9 | 0,740 |
| L = 300 cm | 0,065563 | −9,1 | 0,738 |
| L = 800 cm | 0,064585 | −10,5 | 0,727 |

Tabelle (Fortsetzung)

| Untersuchungsvariante | $F \cdot c_w$ $m^2$ | $\Delta(F \cdot c_w)$ % | $c_w$ |
|---|---|---|---|
| Ausgangszustand ohne Beladung $F = 0,067383\ m^2$ Varianten mit Seitenverkleidung: | 0,059162 | – | 0,878 |
| Länge L = 130 cm | 0,057006 | – 3,6 | 0,846 |
| L = 200 cm | 0,056062 | – 5,2 | 0,832 |
| L = 300 cm | 0,055456 | – 6,3 | 0,823 |
| L = 800 cm | 0,053299 | – 9,9 | 0,791 |

$F$ = Widerstandsfläche $(m^2)$

$c_w$ = Luftwiderstandsbeiwert

$F \times c_w$ = Luftwiderstand $(m^2)$

$\Delta (F \times c_w)$ % = Luftwiderstandsänderungswert

Ausgehend von einem unverkleideten Fahrzeug wurde der Einfluss unterschiedlich langer Seitenverkleidungen 28 im be- und entladenen Zustand des Fahrzeugs untersucht. Dabei bedeutet 1/3 aus dem errechneten Luftwiderstandsänderungswert $\Delta (F \times c_w)$ % aufgrund der verschiedenen Seitenverkleidungen die Treibstoffeinsparung in Liter pro 100 km.

Man sieht, dass z. B. im beladenen Zustand eine Seitenverkleidung 28 von 1,3 m Länge einen Luftwiderstandsänderungswert von 6,7 ergibt, was bereits einer Treibstoffeinsparung von 2,2 l/ 100 km entspricht. Bei einer Länge der Seitenverkleidung von 2 m ergibt sich eine Kraftstoffeinsparung von 2,99 l/100 km, bei einer Länge der Seitenverkleidung von 3 m ergibt sich eine Kraftstoffeinsparung von 3,03 l/100 km und bei einer Länge der Seitenverkleidung von 8 m ergibt sich eine Kraftstoffeinsparung von 3,5 l/100 km.

Im unbeladenen Zustand des Fahrzeugs ergibt eine Länge der Seitenverkleidung von 1,3 m eine Kraftstoffeinsparung von 1,2 l/100 km (entsprechend 1/3 des Luftwiderstandsänderungswerts von 3,6), eine Länge der Seitenverkleidung von 2 m eine Kraftstoffeinsparung von 1,73 l/100 km, eine Länge der Seitenverkleidung von 3 m eine Kraftstoffeinsparung von 2,1 l/100 km und eine Länge der Seitenverkleidung von 8 m eine Kraftstoffeinsparung von 3,3 l/100 km.

Es ist ersichtlich, dass bereits relativ kurze Seitenverkleidungen 28 von ca. 1,3 m bis 3 m eine erhebliche Verringerung des Kraftstoffverbrauchs mit sich bringen, wohingegen eine weitere Verlängerung um ca. 5 m nur noch eine dazu im Vergleich relativ geringe Kraftstoffeinsparung sowohl im unbeladenen als auch im beladenen Zustand des Fahrzeugs erbringt.

## Patentansprüche

1. Fahrzeug zum Transport von Personenkraftwagen (11) mit einer unteren (18, 22) und einer oberen (20, 24) Ladefläche, die mittels im Abstand seitlich des Fahrzeugs angeordneten Tragstützen (26) verbunden sind, gekennzeichnet durch auf beiden Seiten des Fahrzeugs (10) sich zwischen den Ladeflächen (18, 20, 22, 24) vom vorderen Ende der Ladefläche (18) erstreckende Seitenverkleidungen (28), die kürzer als die Ladefläche (18, 20, 22, 24) sind.

2. Fahrzeug nach Anspruch 1, dadurch gekennzeichnet, dass sich die Seitenverkleidungen (28) vom vorderen Ende der Ladefläche (18) in Längsrichtung der Ladefläche (18) um 1,3 m erstrecken.

3. Fahrzeug nach Anspruch 1, dadurch gekennzeichnet, dass sich die Seitenverkleidungen (28) vom vorderen Ende der Ladefläche (18) in Längsrichtung der Ladefläche (18) um 2 m erstrecken.

4. Fahrzeug nach Anspruch 1, dadurch gekennzeichnet, dass sich die Seitenverkleidungen (28) vom vorderen Ende der Ladefläche (18) in Längsrichtung der Ladefläche (18) um 3 m erstrecken.

5. Fahrzeug nach Anspruch 1, dadurch gekennzeichnet, dass sich die Seitenverkleidungen (28) vom vorderen Ende der Ladefläche (18) in Längsrichtung der Ladefläche (18) um 8 m erstrecken.

6. Fahrzeug nach einem der Ansprüche 1 bis 5, dadurch gekennzeichnet, dass längs des Fahrzeugs (10) im Abstand an die vorderen Seitenverkleidungen (28) anschliessend auf beiden Seiten mehrere Seitenverkleidungen (28) vorgesehen sind.

7. Fahrzeug nach einem der Ansprüche 1 bis 6, dadurch gekennzeichnet, dass die Seitenverkleidungen (28) von dem Fahrzeug (10) entfernbar sind.

## Claims

1. Vehicle for transporting automobiles (11) comprising a lower (18, 22) and an upper (20, 24) loading surface, which are connected by means of spaced supports (26) arranged laterally of the vehicle, characterised by lateral covers (28) which extend on both sides of the vehicle (10) between the loading surfaces (18, 20, 22, 24) from the front end of the loading surface (18) and which are shorter than the loading surfaces (18, 20, 22, 24).

2. Vehicle according to claim 1 characterised in that the lateral covers (28) extend for 1.3 m from the front end of the loading surface (18) in the longitudinal direction of the loading surface (18).

3. Vehicle according to claim 1 characterised in that the lateral covers (28) extend for 2 m from the front end of the loading surface (18) in the longitudinal direction of the loading surface (18).

4. Vehicle according to claim 1 characterised in that the lateral covers (28) extend by 3 m from the front end of the loading surface (18) in the longitudinal direction of the loading surface (18).

5. Vehicle according to claim 1 characterised in that the lateral covers (28) extend by 8 m from the front end of the loading surface (18) in the longitudinal direction of the loading surface (18).

6. Vehicle according to one of claims 1 to 5 characterised in that a plurality of spaced lateral covers (28) are provided longitudinally of the vehicle (10) adjoining the front lateral covers (28) on both sides.

7. Vehicle according to one of claims 1 to 6 characterised in that the lateral covers (28) are removable from the vehicle (10).

## Revendications

1. Véhicule pour le transport de voitures particulières (11) présentant une surface de chargement inférieure (18, 22) et une surface de chargement supérieure (20, 24) qui sont reliées au moyen de soutiens porteurs (26) aménagés sur les côtés du véhicule et distants l'un de l'autre, caractérisé par le fait que, sur les deux côtés du véhicule (10), des revêtements latéraux (28) qui sont plus courts que les surfaces de chargement (18, 20, 22, 24) s'étendent entre les surfaces de chargement (18, 20, 22, 24) de l'extrémité avant de la surface de chargement (18).

2. Véhicule suivant la revendication 1, caractérisé par le fait que les revêtements latéraux (28) s'étendent de l'extrémité avant de la surface de chargement (18) dans le sens longitudinal de la surface de chargement (18) d'une longueur de 1,3 m.

3. Véhicule suivant la revendication 1, caractérisé par le fait que les revêtements latéraux (28) s'étendent de l'extrémité avant de la surface de chargement (18) dans le sens longitudinal de la surface de chargement (18) d'une longueur de 2 m.

4. Véhicule suivant la revendication 1, caractérisé par le fait que les revêtements latéraux (28) s'étendent de l'extrémité avant de la surface de chargement (18) dans le sens longitudinal de la surface de chargement (18) d'une longueur de 3 m.

5. Véhicule suivant la revendication 1, caractérisé par le fait que les revêtements latéraux (28) s'étendent de l'extrémité avant de la surface de chargement (18) dans le sens longitudinal de la surface de chargement (18) d'une longueur de 8 m.

6. Véhicule suivant l'une quelconque des revendications 1 à 5, caractérisé par le fait que, le long du véhicule (10) sont prévus plusieurs revêtements latéraux avant (28) distants des revêtements latéraux avant (28), raccordés à ces derniers et arrangés sur les deux côtés.

7. Véhicule suivant l'une quelconque des revendications 1 à 6, caractérisé par le fait que les revêtements latéraux (28) peuvent être démontés du véhicule (10).

FIG. 1